(19) Europäisches Patentamt / European Patent Office / Office européen des brevets

(11) **EP 4 699 887 A1**

(12) **EUROPEAN PATENT APPLICATION**

(43) Date of publication:
**25.02.2026 Bulletin 2026/09**

(21) Application number: **24196085.5**

(22) Date of filing: **23.08.2024**

(51) International Patent Classification (IPC):
**B60W 50/10** (2012.01)    **B60W 50/08** (2020.01)
**B62D 15/02** (2006.01)     **B60W 30/12** (2020.01)
**B60W 50/00** (2006.01)     **B60W 50/16** (2020.01)

(52) Cooperative Patent Classification (CPC):
**B60W 50/10; B60W 50/08; B62D 15/025;**
B60W 30/12; B60W 50/0097; B60W 50/16;
B60W 2050/0029; B60W 2050/0031;
B60W 2050/007; B60W 2540/18; B60W 2552/30;
B60W 2710/202

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TOYOTA JIDOSHA KABUSHIKI KAISHA**
**Aichi-ken, 471-8571 (JP)**

(72) Inventors:
• **RIOS LAZCANO, Andrea Michelle**
  **1140 BRUSSELS (BE)**

• **CARRERA AKUTAIN, Xabier**
  **1140 BRUSSELS (BE)**
• **SHYROKAU, Barys**
  **2628 CD DELFT (NL)**
• **HARMANKAYA, Hüseyin**
  **2628 CD DELFT (NL)**

(74) Representative: **Cabinet Beau de Loménie**
**103, rue de Grenelle**
**75340 Paris Cedex 07 (FR)**

Remarks:
Amended claims in accordance with Rule 137(2) EPC.

(54) **METHODS AND SYSTEMS FOR DRIVER ASSISTANCE**

(57)    A computer-implemented method for assisting a driver of a vehicle comprising: (S10) measuring environment data representative of a driving situation of a vehicle on a road; (S20) generating predicted control variables based on the environment data by using a neural network-based model that is trained to learn the behavior of the driver; (S30) generating optimized control variables based on the predicted control variables, wherein the predicted control variables are inputted into a model predictive controller as reference targets over a receding horizon; and (S40) applying the optimized control variables to the vehicle controls.

FIG. 1

EP 4 699 887 A1

**Description**

BACKGROUND OF THE INVENTION

1. Field of the Invention

The invention relates to systems and methods for assisting a driver of a vehicle. In particular, the invention relates to methods and systems for adjusting steering wheel torque of a vehicle based on predicted driver behaviour.

2. Description of Related Art

Advanced Driver Assistance Systems (ADAS) have become a widespread solution during the transition to fully automated driving. These systems aim to increase road safety and driver comfort by using partial automation to take over certain driving tasks, attempting to minimize human errors and reduce the workload of the task (see [REF 1] and [REF 2]). For example, a Lane Keeping Assist (LKA) performs the steering task to follow the road centerline. Most commercially available LKA systems are found in vehicles which are rated at SAE level 2 or lower, making the driver the fallback entity when the assist fails to work.

However, due to the driver having an inactive role in the steering task where he mainly monitors the system, the risk of an unsafe take-over of the steering control by a driver assistance system increases. This can be due to a reduced situational awareness of the driver when having to suddenly go from mental underload (e.g. boredom) to mental overload during the transition from assisted to manual steering control (see [REF 3]).

The following references disclose various methods relating to driver assistance.

[REF 1] LEE, John D. Fifty years of driving safety research. Human factors, 2008, vol. 50, no 3, p. 521-528.

[REF 2] WALKER, Guy H., STANTON, Neville A., et YOUNG, Mark S. Where is computing driving cars? International Journal of Human-Computer Interaction, 2001, vol. 13, no 2, p. 203-229.

[REF 3] LU, Zhenji, HAPPEE, Riender, CABRALL, Christopher DD, et al. Human factors of transitions in automated driving: A general framework and literature survey. Transportation research part F: traffic psychology and behaviour, 2016, vol. 43, p. 183-198.

[REF 4] LAZCANO, Andrea Michelle Rios, NIU, Tenghao, AKUTAIN, Xabier Carrera, et al. MPC-based haptic shared steering system: A driver modeling approach for symbiotic driving. IEEE/ASME Transactions on Mechatronics, 2021, vol. 26, no 3, p. 1201-1211.

[REF 5] SCHUSTER, Mike et PALIWAL, Kuldip K. Bidirectional recurrent neural networks. IEEE transactions on Signal Processing, 1997, vol. 45, no 11, p. 2673-2681.

[REF 6] VAN WUK, Robert, LAZCANO, Andrea Michelle Rios, AKUTAIN, Xabier Carrera, et al. Data-driven steering torque behaviour modelling with hidden Markov models. IFAC-PapersOnLine, 2022, vol. 55, no 29, p. 31-36.

[REF 7] WEI, Hongchuan, ROSS, Weston, VARISCO, Stefano, et al. Modeling of human driver behavior via receding horizon and artificial neural network controllers. In : 52nd IEEE Conference on Decision and Control. IEEE, 2013. p. 6778-6785.

[REF 8] OKAMOTO, Kazuhide et TSIOTRAS, Panagiotis. Data-driven human driver lateral control models for developing haptic-shared control advanced driver assist systems. Robotics and Autonomous Systems, 2019, vol. 114, p. 155-171.

SUMMARY OF THE INVENTION

The present method is aimed at solving at least some of the problems of the prior art.

According to aspects of the present disclosure, a computer-implemented method for assisting a driver of a vehicle is provided. The method comprises steps of:

- measuring environment data representative of a driving situation of a vehicle on a road;
- generating predicted control variables based on the environment data by using a neural network-based model that is trained to learn the behavior of the driver;
- generating optimized control variables based on the predicted control variables, wherein the predicted control variables are inputted into a model predictive controller as reference targets over a receding horizon; and
- applying the optimized control variables to the vehicle controls.

In the present method, the behavior of the driver when driving a vehicle is modelled using a neural network-based model. Therefore, intentions of the driver related to the driving may be predicted and anticipated based on an analysis of a current driving situation using the neural network-based driver model. The behavior of a driver assistance system incorporating such driver model can therefore be adjusted based on such predictions to better align with the driver's intentions.

In particular, in the present method, a driver model based on an artificial neural network (ANN) is synergistically combined with a model predictive control (MPC) algorithm in order to provide a hybrid controller for a driver assistance system. In such hybrid controller, collaboration is advantageously improved between the driver and the driver assistance system so that the comfort of the driver is increased while using the driver assistance system and possible conflicts may be avoided. Further, acceptance of the actions of the driver assistance by the driver is enhanced.

The present method is a significant improvement over methods of the prior art that do not take into account the driver's intentions (see [REF 7]). Further, the present method also represents improvement over methods that only attempt to account for the driver's behavior based on a parametric representation which cannot fully represent the driver's intentions (see [REF 4]).

Further, the present method constitutes an enhancement over methods of the prior art implementing a driver assistance based solely on a neural network without any contribution from a model predictive control (see [REF 8]). In particular, such methods generally provide poor performance when dealing with driving situations that have not been encountered during training of the neural network (unseen data).

In the present description, for the sake of the example, an application of the present method to assist a driver with keeping a vehicle on a predetermined lane of a road (Lane Keeping Assist) is detailed. However, the present method can be generalized to any other type of driver assistance, such as Lane Change Assist, (Adaptive) Cruise control, Electronic Stability Control (ESC), Autonomous Obstacle Avoidance.

According to embodiments, the method further comprises:

- measuring intended control variables that are applied by a driver to the vehicle controls; and
- applying corrected control variables to the vehicle actuators wherein the corrected control variables are dependent on the intended control variables and on the optimized control variables.

With the present configuration, the driver assistance system is a human-centric system with an in-loop controller that can actuate on vehicle controls. Therefore, when driving a vehicle, a driving assistance system can benefit both from actual actions of a driver on the vehicle controls and on optimized control of a model predictive control based on predictions from a neural-network-based driver model.

According to embodiments, the corrected control variables are weighted sums of the intended control variables and of the optimized control variables; wherein a ratio of the weights of the intended control variables to the weights of the optimized control variables representing a control authority distribution between the driver and a driving assistance. The driving assistance signal may be provided by the output of the model predictive control.

According to embodiments, the method further comprises providing the driver with a haptic feedback representative of at least one of the corrected control variables that are applied to the actuators of the vehicle.

According to embodiments, the neural network-based model is a Bidirectional Long Short Memory (BiLSTM) recurrent neural network that is trained to predict driver behavior.

According to embodiments, the BiLSTM model is trained based on driving data acquired in a driving simulator when a driver is requested to perform a driving task for a predetermined time.

Advantageously, as the BiLSTM model is designed on driver's feedback, it is possible to obtain an optimal driver model that can portray non-linear cognitive behavior of the driver.

According to embodiments, the driving task comprises following a middle lane of a road while actuating only on steering controls of the vehicle.

According to embodiments, the optimized control variables comprise a steering torque and wherein the model predictive controller implements a lane keeping assist function, wherein a steering torque configured to make the vehicle follow a road lane is applied to the vehicle.

According to embodiments, the method further comprises providing the driver with a haptic feedback representative of at least one of the corrected control variables, wherein the at least one corrected variables is a steering torque applied to the controls of the vehicle.

According to embodiments, the haptic feedback is provided through elements of a steering wheel of the vehicle.

The present disclosure is further related to a driver assistance system configured to implement steps of the above method.

The present disclosure is further related to a computer program including instructions for executing the steps of the above method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the method in question or to be used in its execution.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram representing aspects of a method according to the present disclosure;
FIG. 2 is a block diagram illustrating architecture of a method according to embodiments;
FIGS. 3-4 are charts illustrating performances of the method according to the present disclosure.

DETAILED DESCRIPTION OF EMBODIMENTS

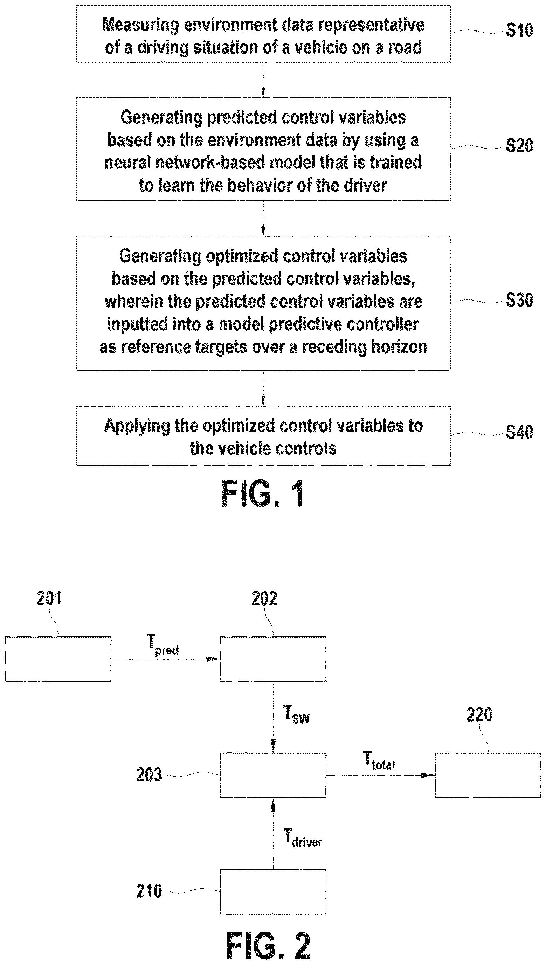

Methods and systems for assisting a driver of a vehicle, which constitute exemplary embodiments of the present disclosure, are now going to be presented in relation with FIGS.1-4.

The present method may comprise the following steps.

In step S10, environment data representative of a driving situation of a vehicle on a road are measured. They can be measured by various sensors provided in the vehicle. For example, the environment data may comprise road curvature, road deviation distance and road deviation angle with respect to an ideal road centerline of a driving lane. The deviation distance and deviation angle may be measured directly in front of the vehicle position and/or at a predetermined distance ahead of the vehicle position (such as 10 meters or 30 meters). The measurements ahead can be obtained based on camera measurements. Further, in embodiments, it may be assumed a constant vehicle speed and constant steering inputs.

In step S20, predicted control variables, $T_{pred}$, based on the environment data by using a neural network-based model 201 that is trained to learn the behavior of the driver 210.

In step S30, optimized control variables are generated based on the predicted control variables, $T_{pred}$. The predicted control variables, $T_{pred}$, are inputted into a model predictive control algorithm 202 as reference targets over a receding horizon.

In step S40, the optimized control variables, $T_{sw}$, are applied to the vehicle controls 203. The vehicle controls then transmit the variables to the vehicle actuators 220 to that the trajectory of the vehicle is modified accordingly.

The architecture may be represented as illustrated in Fig. 2. In particular, when the vehicle 220 is being driven by a driver 210, environment data are acquired and fed to a pre-trained neural network 201 in order to predict the driver behavior in the current driving situation. The predicted behavior of the driver 210, which is related to actuation on controls of the vehicle, is characterized by one or more predicted control variables, $T_{pred}$.

The predicted control variables, $T_{pred}$, are fed as time-varying reference targets to a model predictive control (MPC) framework 202 which generates optimized control variables, $T_{sw}$, forming the assist signal output of a driver assistance system. The optimized control variables, $T_{sw}$, are generated by minimizing a cost function considering the reference targets and various constraints depending on the characteristics of the driver assistance task and of the vehicle. The MPC may be implemented according to existing methods (see [REF 4]).

Various predicted control variables, $T_{pred}$, may be generated by the neural network depending on the extent of the driver assistance considered for which the neural network is trained. For example, in the case of a Lane Keeping Assist, a predicted control variable such as the steering wheel torque may be generated by the neural network. In such case, the steering wheel torque may be a torque value that is predicted to be the close to a torque value that would be desired by the driver in the current driving situation.

As illustrated in Fig. 2, in embodiments, the vehicle controls 203 receive both control variables applied by the driver, $T_{driver}$, and control variables applied by the driver assistance system, $T_{sw}$, through the output of the MPC controller. Further, the vehicle controls 203 therefore implements a control authority distribution between the driver and the driver assistance system so that corrected control variables representing the total corrected inputs on the vehicle controls, $T_{total}$, are transmitted to the vehicle actuators 220 to effectively modify the dynamics of the vehicle, for example modify the steering wheel torque of the vehicle so that the vehicle follows a lane of the road. Therefore, the driving situation of the vehicle is affected by the modification of the vehicle dynamics.

In embodiments, when considering vehicle controls related to a steering function, a controller such as an Electric Power Steering (EPS) unit connected to the steering system of the vehicle may receive the steering wheel torque input from the driver and the steering wheel torque input from the model predictive control and mix such inputs with a predetermined control authority distribution ratio in order to provide a final torque value that is applied to the vehicle steering system.

The control authority distribution may be a weighted sum of the control variables applied by the driver and the control variables applied by the driver assistance system. The control authority distribution may have different configurations depending on the level of autonomy that is desired by the driver. In particular, a balanced ratio of 50%-50% between the driver control and the driver assistance control is found to be particularly advantageous in a general driving situation when comfort of the driver is taken into account. Further, when prioritizing security of the driver over comfort of the driver, a ratio superior to 80% in favor of the driver assistance control is found to be advantageous.

In the present disclosure, the neural network that is used to predict the behaviour of the driver may be a recurrent neural network such as a Bidirectional long short-term memory model, "BiLSTM" (see [REF 5]). The neural network is trained to predict a driver model that can generate predicted control variables from a current driving situation. The driver model that is learnt may be developed for different application, such as lateral control of the vehicle, or lane change prediction.

As an example, in the context of lane change prediction, the neural network may be trained to infer a lane change prediction model. The model may comprise classifiers wherein the labels correspond to: lane change intent by the driver on the left, lane change intent by the driver on the right, and no lance change intent at all. As other examples, the neural network may be trained to a continuous prediction model that infers the real-time behavior of the driver regarding a steering wheel torque profile during a change of lane on a road or while following a lane without lane changes. The learned behavior allows the model to predict accurately the actions of a driver on the controls of a vehicle so that the controls proposed by the driver assistance model feel more natural for the driver.

The BiLSTM model may comprise one or more long short-term memory layers followed by a fully-connected layer. In embodiments, the dataset to train, validate and test the BiLSTM model may be similar to what is used in [REF 6]. In this dataset, seven participants drove a total of 14 hours in a driving simulator. The task of the participants consists in driving a vehicle on the middle lane of a three-lane highway, where they only actuate on the steering controls of the vehicle as the vehicle is set at a constant speed of 100 km/h. For each participant, the task is two-hour long and comprises 24 different road scenarios with different combinations of corners where the data is collected at a rate of 100 Hz. The data is split into 50% for training, 25% for validation, and 25% for testing.

In embodiments, during training, parameters of the BiLSTM model used to infer a driver's behavior are adjusted based on both a subjective and objective evaluation.

The objective evaluation is done by training the model on the training dataset and assessing performance on the validation dataset using one or more Key Performance Indicators (KPI). The KPI may comprise, for example, an accuracy indicator and a smoothness indicator characterizing the predicted control variables that are predicted by the model.

The accuracy indicator may be defined as follows:

$$A_{T_{pred}} = \left(1 - \frac{1}{SD(T_{ref})} RMSE(T_{pred})\right) . 100 \qquad \text{(Equation 1A)}$$

In Equation 1A, $T_{pred}$, denotes a control variable predicted by the BiLSTM model, and $T_{ref}$, denotes the control variable applied by the driver, which the BiLSTM model learns to predict. Such control variables may correspond to the steering wheel torque. Further, SD denotes a standard deviation, and RMSE denotes a root mean square error.

Further, the smoothness indicator, be defined as the standard deviation of a torque rate, which can be expressed as follows:

$$SM_{T_{pred}} = \sqrt{\frac{1}{N} \sum_{i=1}^{N} \left(\dot{T}_{i,pred} - \mu_{\dot{T}_{pred}}\right)^2} \qquad \text{(Equation 1B)}$$

In Equation 1B, $\mu$, denotes a mean value and, N, denotes a number of points in the time series representing, $T_{pred}$.

In the present disclosure, the dynamics of the vehicle that is used in order to implement a model predictive control is characterized by a set of dynamics parameters and variables that correspond to a predetermined model of the vehicle.

The subjective evaluation of the model is done by assessing the feel of the driver regarding some vehicle controls generated by the BiLSTM model. Such feel may be transmitted to the driver through a haptic feedback on a vehicle control member.

For example, the subjective evaluation may be done by assessing the steering feel imposed by the BiLSTM model in the driving simulator with experienced drivers and different model variations. In embodiments, the steering feel is provided to the driver by a steering wheel with a haptic feedback (see [REF 4]). The parameters of the model are then tuned based on the report of the drivers.

In embodiments, the real-time time steering wheel prediction is applied directly as torque feedback.

In embodiments, during the subjective evaluation, the output of the BiLSTM model is directly provided as torque feedback without using a model predictive control algorithm to optimize the torque value regarding the driving task. Therefore, a better impression of the raw performance of the BiLSTM may be provided to the driver.

In embodiments, the vehicle dynamics used by the MPC to optimize the control variables that are inputted to the vehicle controls may be represented using a linear bicycle model with linear steering dynamics, as disclosed in [REF 4]. Accordingly, the model of vehicle may assume a constant longitudinal velocity, $v_x$, such as 100km/h, and linear tyre dynamics. The steering model may use torque dynamics expressed as a steering wheel torque (SWT) or a steering wheel angle. When considering the steering wheel torque, the control input, u, of the MPC controller is the SWT rate, $T_{sw}$, which is integrated and applied as the assist torque, $T_{sw}$, of the driving assistance system when implementing Lane Keepin Assist (LKA).

In embodiments, the dynamics of the vehicle may in particular be expressed with the following equations.

$$\dot{X} = v_x \cos\psi - v_y \sin\psi \qquad \text{(Equation 2A)}$$

$$\dot{Y} = v_x \sin\psi - v_y \sin\psi \qquad \text{(Equation 2B)}$$

$$\dot{v}_y = \frac{F_{y,f}\cos\delta + F_{y,r}}{m} - v_x r \qquad \text{(Equation 2C)}$$

$$\dot{r} = \frac{l_f F_{y,f}\cos\delta - l_r F_{y,r}}{I_{zz}} \qquad \text{(Equation 2D)}$$

$$\ddot{\theta}_{sw} = \frac{T_{sw}}{I_{sw}} - \frac{K_{sw}}{I_{sw}}\theta_{sw} - \frac{C_t}{I_{sw}}\dot{\theta}_{sw} + \frac{K_t}{I_{sw}}\theta_c + \frac{C_t}{I_{sw}}\dot{\theta}_c \qquad \text{(Equation 2E)}$$

$$\ddot{\theta}_c = \frac{T_w}{G\,I_c} + \frac{K_t}{I_c}\theta_{sw} + \frac{C_t}{I_c}\dot{\theta}_{sw} - \frac{K_t + K_{sw}}{I_c}\theta_c - \frac{C_t + C_{sw}}{I_c}\dot{\theta}_c \qquad \text{(Equation 2F)}$$

The notation conventions used here to express the vehicle dynamics in the described embodiments are similar to the ones used in [REF 4]. Accordingly, in Equations 1A-1F, $X$, and $Y$, are the global coordinates of the vehicle, $\psi$, is the yaw angle of the vehicle, $v_y$, is the lateral velocity, $m$, is the vehicle mass and, $r$, is the yaw rate. Furthermore, $l_f$ and, $l_r$, denote the distance between the center of gravity and the front and rear axle, respectively. $I_{zz}$, is the yaw inertia of the vehicle at the center of mass, $I_{sw}$, is the steering wheel inertia and, $I_c$, is the inertia of the front wheels and the rack with respect to the pinion. $\theta_{sw}$, denotes the steering wheel angle and, $\theta_c$, is the steering angle column. $K_t$, and $K_{sw}$, are the steering column and self-centering stiffness, respectively, $C_t$, is the torsion bar damping, $C_{sw}$, is the steering mechanism damping with respect to the steering wheel axle and G denotes the steering gear ratio. The road wheel angle, $\delta$, is defined as $\delta = \theta_c/G$. The self-aligning moment, $T_{sw}$, is approximated as, $T_w = F_{y,f}\, d$, wherein, d, denotes the trail distance of the front tyre.

Furthermore, the lateral forces on the front axle, $F_{y,f}$, and on the rear axle, $F_{y,r}$ may be expressed as follows.

$$F_{y,f} = -C_{\alpha,f}\tan\alpha_f \qquad \text{(Equation 3A)}$$

$$F_{y,r} = -C_{\alpha,r}\tan\alpha_r \qquad \text{(Equation 3B)}$$

In Equations 2A-2B, $C_{\alpha,f}$, and $C_{\alpha,r}$, are the cornering stiffness of the front and rear tyres, respectively. Further, $\alpha_f$, and, $\alpha_r$, are the slip angles at the front and rear axle, respectively.

The state vector, $x_{MPC}$ characterizing the state of the vehicle that is controlled by the Model Predictive Control (MPC) algorithm may be expressed as follows.

$$x_{MPC} = [X \ Y \ v_y \ \psi \ r \ \theta_{sw} \ \dot{\theta}_{sw} \ \theta_c \ \dot{\theta}_c \ T_{sw}]^T \qquad \text{(Equation 4)}$$

In the MPC algorithm, the output of the neural network predicting the behavior of the driver is fed to the MPC as a reference target using a cost function. In embodiments, the cost function may be expressed as follows.

$$J = \sum_{k=0}^{N_p-1} w_X \left(X_k - X_{ref,k}\right)^2 + w_Y \left(Y_k - Y_{ref,k}\right)^2$$

$$+ w_\psi \left(\psi_k - \psi_{ref,k}\right)^2 + w_T \left(T_{sw,k} - T_{pred,k}\right)^2 + w_u u_k^2$$

$$+ w_{X_N} \left(X_{N_p} - X_{ref,N_p}\right)^2 + w_{Y_N} \left(Y_{N_p} - Y_{ref,N_p}\right)^2$$

$$+ w_{\psi_N} \left(\psi_{N_p} - \psi_{ref,N_p}\right)^2 + w_{T_N} \left(T_{sw,N_p} - T_{pred,N_p}\right)^2$$

$$\text{(Equation 5)}$$

In Equation 4, $w_x$, and, $w_{X_N}$, are the stage and terminal cost weights for the error in the global X-direction, $w_Y$, and, $w_{Y_N}$, are the weights for the Y-direction, and, $w_\psi$, and, $w_{\psi N}$, are the weights for the yaw angle error. $w_T$, and $w_{T_N}$, denote the stage and terminal cost weights for the difference between the optimized torque, $T_{sw}$, that is eventually applied to the vehicle controls and the predicted torque, $T_{pred}$, that is predicted by the neural network model. Thus the two latter weights determine a level of penalty when the prediction of the neural network model (the predicted control variables) does not finally match the actual SWT being applied (the optimized control variables determined by the MPC algorithm). Further, $w_u$, denotes a weight for the control input, $u = \dot{T}_{sw}$.

The reference signals, $Y_{ref}$, $X_{ref}$, and $\psi_{ref}$, represent the optimized path that should be followed by the vehicle, for example the center of the road lane, while, $N_p$, denotes the prediction horizon. The weights may be determined empirically by running simulations or using a driving simulator to ensure driver-in-the-loop stability (i.e. maintaining stability of the driver assistance system while taking into account actuation from the drivers on the vehicle controls).

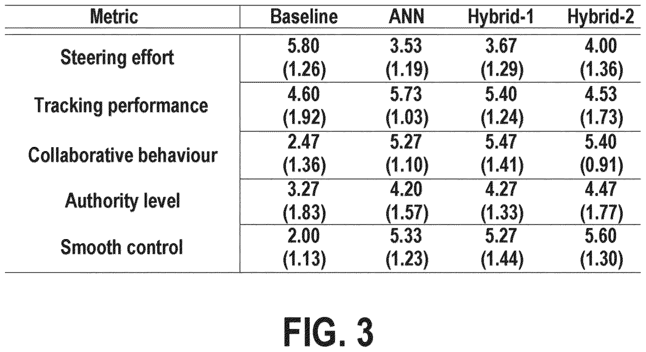

Fig. 3-4 show experimental performances of the present method when applied to a driver assistance system implementing a Lane Keeping Assist (LKA) controller. In the experiments, the controller actuates on the steering wheel torque of the vehicle. Different embodiments are evaluated with respect to a baseline controller without neural network-based prediction of the driver's behavior. The difference controller embodiments evaluated are presented hereafter.

Baseline LKA: A basic controller that only comprises an adaptive level of control aiming at accurately following the center of a road lane by imposing an optimized torque to the vehicle steering controls without considering the driver's intentions. The level of adaptive control is inversely proportional to the opposing steering wheel torque input from the driver. Such controller is based on a Linear-Quadratic Regulator (LQR) combined with a proportional-integral-derivative (PID) controller. The LKA actuation gets momentarily deactivated if the driver opposes the LKA actuation with a predetermined threshold torque value.

ANN: Reference embodiment wherein an artificial neural network based on a Bidirectional Long Short Memory (BiLSTM) recurrent neural network is used to predict the driver's intentions regarding actuation on the steering wheel torque. In this embodiment, the prediction of the neural network is passed on to the actual assist torque instead of going to a MPC controller.

Hybrid-1 and Hybrid-2: Hybrid controllers implementing embodiments of the method according to the present disclosure wherein the predictions of the neural network regarding the driver's intention relative the steering wheel torque actuation are fed as reference targets to an MPC controller. These two controllers use the same set of weights in the MPC and in the neural network.

In the ANN controller and in the Hybrid-1 controller, the distribution of control authority between controller and the driver is 70%-30%. This means that the controllers have a 70% control authority in the steering wheel torque actuation, leaving the remaining 30% to the driver to perform the lane keeping task. As a result 70% of the total torque actuated on the steering wheel torque controls of the vehicle will be derived from the controller while the 30% remaining will be derived from the driver action on the control member of the vehicle.

In the Hybrid-2 controller, the distribution of control authority between the controller and the driver is equal (50%-50%).

Fig. 3 shows that the hybrid controllers implementing the present method outperform the baseline controller in almost every aspect. Indeed, with the present method, there is a synergy between the prediction of the driver's intentions and the optimization of a trajectory under constraints with the MPC. In particular, the MPC algorithm optimizes the control input by imposing a balancing between following the center of the lane and adhering to the predictions of the neural network model related to the driver's intentions.

The proposed controllers decrease the driver's steering effort while substantially improving the collaboration with the assist. Notably, the Hybrid-2 controller shows the most favorable assist as it fosters collaborative driving without lowering the path tracking performance.

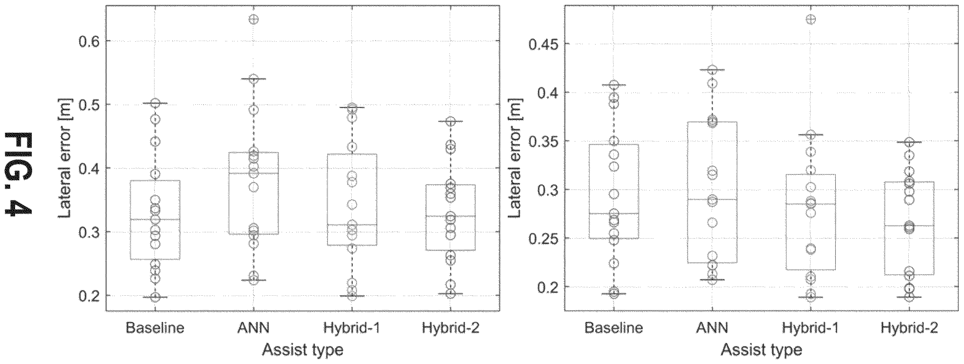

Fig. 4 shows RMSE values (left panel) and Standard Deviation values (right panel) of the lateral error of the vehicle trajectory with reference to the center of the lane during the steering task. Notable the ANN controller has a relatively higher RMSE and SD values compared to the other controllers, with an increase up to 15.2% and 11.1%, respectively. This shows that a lack of MPC penalizes the performance in accomplishing the steering task. Therefore, this shows the existing synergy between the ANN and the MPC in the Hybrid controllers of the present method.

Further, the hybrid-2 controller, which corresponds to a balanced control authority between the assist and the driver, is preferred y the drives as it is considered to exhibit a better collaborative behavior with the driver thereby avoiding possible conflicts.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

**Claims**

1.  A computer-implemented method for assisting a driver of a vehicle comprising:

    - (S10) measuring environment data representative of a driving situation of a vehicle on a road;
    - (S20) generating predicted control variables ($T_{pred}$) based on the environment data by using a neural network-based model (201) that is trained to learn the behavior of the driver (210);
    - (S30) generating optimized control variables based on the predicted control variables ($T_{pred}$), wherein the predicted control variables ($T_{pred}$) are inputted into a model predictive controller (202) as reference targets over a receding horizon; and
    - (S40) applying the optimized control variables ($T_{sw}$) to the vehicle controls (203).

2.  The method of claim 1, further comprising:

    - measuring intended control variables ($T_{driver}$) that are applied by a driver (210) to the vehicle controls (203); and
    - applying corrected control variables ($T_{total}$) to the vehicle actuators (220) wherein the corrected control variables ($T_{total}$) are dependent on the intended control variables ($T_{driver}$) and on the optimized control variables ($T_{sw}$).

3.  The method of claim 2, wherein the corrected control variables ($T_{total}$) are weighted sums of the intended control variables ($T_{driver}$) and of the optimized control variables ($T_{sw}$); wherein a ratio of the weights of the intended control variables ($T_{driver}$) to the weights of the optimized control variables ($T_{sw}$) represents a control authority distribution between the driver and a driving assistance.

4.  The method of claim 2 or 3, further comprising:

    - providing the driver with a haptic feedback representative of at least one of the corrected control variables ($T_{total}$) that are applied to the actuators (220) of the vehicle.

5.  The method of any of claims 1 to 4, wherein the neural network-based model is a Bidirectional Long Short Memory (BiLSTM) recurrent neural network that is trained to predict driver behavior.

6.  The method of claim 5, wherein the BiLSTM model is trained based on driving data acquired in a driving simulator when a driver is requested to perform a driving task for a predetermined time.

7.  The method of claim 6, wherein the driving task comprises following a middle lane of a road while actuating only on steering controls of the vehicle.

8.  The method of any of claims 1 to 7, wherein the optimized control variables comprises a steering torque and wherein the model predictive controller implements a lane keeping assist function, wherein a steering torque configured to make the vehicle follow a road lane is applied to the vehicle.

9. The method of claim 8, further comprising:

- providing the driver with a haptic feedback representative of at least one of the corrected control variables, wherein the at least one corrected variables is a steering torque applied to the controls of the vehicle.

10. The method of claim 9, wherein the haptic feedback is provided through elements of a steering wheel of the vehicle.

11. A driver assistance system configured to implement steps of the method according to any of claims 1 to 10.

12. A computer program set including instructions for executing the steps of the method according to any of claims 1 to 10 when said program set is executed by at least one computer.

13. A recording medium readable by a computer and having recorded thereon a computer program including instructions for executing the steps of the method according to any of claims 1 to 10.

**Amended claims in accordance with Rule 137(2) EPC.**

1. A computer-implemented method for assisting a driver of a vehicle comprising:

- (S10) measuring environment data representative of a driving situation of a vehicle on a road;
- (S20) generating predicted control variables ($T_{pred}$) based on the environment data by using a neural network-based model (201) that is trained to learn the behavior of the driver (210);
- (S30) generating optimized control variables based on the predicted control variables ($T_{pred}$), wherein the predicted control variables ($T_{pred}$) are inputted into a model predictive controller (202) as reference targets over a receding horizon;
- (S40) applying the optimized control variables ($T_{sw}$) to the vehicle controls (203).
- measuring intended control variables ($T_{driver}$) that are applied by a driver (210) to the vehicle controls (203); and
- applying corrected control variables ($T_{total}$) to the vehicle actuators (220) wherein the corrected control variables ($T_{total}$) are dependent on the intended control variables ($T_{driver}$) and on the optimized control variables ($T_{sw}$),

the method being **characterized in that**:

- the corrected control variables ($T_{total}$) are weighted sums of the intended control variables ($T_{driver}$) and of the optimized control variables ($T_{sw}$); wherein a ratio of the weights of the intended control variables ($T_{driver}$) to the weights of the optimized control variables ($T_{sw}$) represents a control authority distribution between the driver and a driving assistance.

2. The method of claim 1, further comprising:

- providing the driver with a haptic feedback representative of at least one of the corrected control variables ($T_{total}$) that are applied to the actuators (220) of the vehicle.

3. The method of claim 1 or 2, wherein the neural network-based model is a Bidirectional Long Short Memory (BiLSTM) recurrent neural network that is trained to predict driver behavior.

4. The method of claim 3, wherein the BiLSTM model is trained based on driving data acquired in a driving simulator when a driver is requested to perform a driving task for a predetermined time.

5. The method of claim 4, wherein the driving task comprises following a middle lane of a road while actuating only on steering controls of the vehicle.

6. The method of any of claims 1 to 5, wherein the optimized control variables comprises a steering torque and wherein the model predictive controller implements a lane keeping assist function, wherein a steering torque configured to make the vehicle follow a road lane is applied to the vehicle.

7. The method of claim 6, further comprising:

- providing the driver with a haptic feedback representative of at least one of the corrected control variables, wherein the at least one corrected variables is a steering torque applied to the controls of the vehicle.

8. The method of claim 7, wherein the haptic feedback is provided through elements of a steering wheel of the vehicle.

9. A driver assistance system configured to implement steps of the method according to any of claims 1 to 8.

10. A computer program set including instructions for executing the steps of the method according to any of claims 1 to 8 when said program set is executed by at least one computer.

11. A recording medium readable by a computer and having recorded thereon a computer program including instructions for executing the steps of the method according to any of claims 1 to 8.

Measuring environment data representative
of a driving situation of a vehicle on a road — S10

Generating predicted control variables
based on the environment data by using a
neural network-based model that is trained — S20
to learn the behavior of the driver

Generating optimized control variables
based on the predicted control variables,
wherein the predicted control variables are — S30
inputted into a model predictive controller
as reference targets over a receding horizon

Applying the optimized control variables to
the vehicle controls — S40

## FIG. 1

201                    202

$T_{pred}$

$T_{SW}$

220

203                    $T_{total}$

$T_{driver}$

210

## FIG. 2

| Metric | Baseline | ANN | Hybrid-1 | Hybrid-2 |
|---|---|---|---|---|
| Steering effort | 5.80 (1.26) | 3.53 (1.19) | 3.67 (1.29) | 4.00 (1.36) |
| Tracking performance | 4.60 (1.92) | 5.73 (1.03) | 5.40 (1.24) | 4.53 (1.73) |
| Collaborative behaviour | 2.47 (1.36) | 5.27 (1.10) | 5.47 (1.41) | 5.40 (0.91) |
| Authority level | 3.27 (1.83) | 4.20 (1.57) | 4.27 (1.33) | 4.47 (1.77) |
| Smooth control | 2.00 (1.13) | 5.33 (1.23) | 5.27 (1.44) | 5.60 (1.30) |

# FIG. 3

FIG. 4

## EUROPEAN SEARCH REPORT

**Application Number**

EP 24 19 6085

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/055066 A1 (ASADI EHSAN [CA] ET AL) 23 February 2023 (2023-02-23) * paragraphs [0004] - [0023], [0038] - [0057], [0068]; figures 1, 2, 5 * | 1,11-13 | INV. B60W50/10 B60W50/08 B62D15/02 |
| X | LANG YILIN ET AL: "A Shared Control Approach for Autonomous Vehicles via Driver Behaviors Learning", 2023 IEEE 12TH DATA DRIVEN CONTROL AND LEARNING SYSTEMS CONFERENCE (DDCLS), IEEE, 12 May 2023 (2023-05-12), pages 916-921, XP034371339, DOI: 10.1109/DDCLS58216.2023.10166381 [retrieved on 2023-07-07] | 1-4,7-13 | ADD. B60W30/12 B60W50/00 B60W50/16 |
| Y | * abstract, introduction and Fig. 1 with related description * | 5,6 | |
| Y | XU FEI-XIANG ET AL: "Modeling Lateral Control Behaviors of Distracted Drivers for Haptic-Shared Steering System", IEEE TRANSACTIONS ON INTELLIGENT TRANSPORTATION SYSTEMS, IEEE, PISCATAWAY, NJ, USA, vol. 24, no. 12, 1 December 2023 (2023-12-01), pages 14772-14782, XP011954833, ISSN: 1524-9050, DOI: 10.1109/TITS.2023.3293504 [retrieved on 2023-07-18] | 5,6 | |
| A | * Abstract and Introduction * | 9,10 | |

**TECHNICAL FIELDS SEARCHED (IPC)**

B60W

The present search report has been drawn up for all claims

| Place of search | Date of completion of the search | Examiner |
|---|---|---|
| Munich | 4 February 2025 | Elbel, Benedikte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 19 6085

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| US 2023055066 A1 | 23-02-2023 | CN 115707609 A | 21-02-2023 |
| | | DE 102022112323 A1 | 23-02-2023 |
| | | US 2023055066 A1 | 23-02-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LEE, JOHN D.** Fifty years of driving safety research.. *Human factors*, 2008, vol. 50 (3), 521-528
- **WALKER, GUY H.** ; **STANTON, NEVILLE A.** ; **YOUNG, MARK S.** Where is computing driving cars?. *International Journal of Human-Computer Interaction*, 2001, vol. 13 (2), 203-229
- **LU, ZHENJI** ; **HAPPEE, RIENDER** ; **CABRALL, CHRISTOPHER DD et al.** Human factors of transitions in automated driving: A general framework and literature survey.. *Transportation research part F: traffic psychology and behaviour*, 2016, vol. 43, 183-198
- **LAZCANO, ANDREA MICHELLE RIOS** ; **NIU, TENGHAO** ; **AKUTAIN, XABIER CARRERA et al.** MPC-based haptic shared steering system: A driver modeling approach for symbiotic driving.. *IEEE/ASME Transactions on Mechatronics*, 2021, vol. 26 (3), 1201-1211

- **SCHUSTER, MIKE** ; **PALIWAL, KULDIP K.** Bidirectional recurrent neural networks.. *IEEE transactions on Signal Processing*, 1997, vol. 45 (11), 2673-2681
- **VAN WUK, ROBERT** ; **LAZCANO, ANDREA MICHELLE RIOS** ; **AKUTAIN, XABIER CARRERA et al.** Data-driven steering torque behaviour modelling with hidden Markov models.. *IFAC-PapersOnLine*, 2022, vol. 55 (29), 31-36
- Modeling of human driver behavior via receding horizon and artificial neural network controllers.. **WEI, HONGCHUAN** ; **ROSS, WESTON** ; **VARISCO, STEFANO et al.** 52nd IEEE Conference on Decision and Control.. IEEE, 2013, 6778-6785
- **OKAMOTO, KAZUHIDE**. TSIOTRAS, Panagiotis. Data-driven human driver lateral control models for developing haptic-shared control advanced driver assist systems.. *Robotics and Autonomous Systems*, 2019, vol. 114, 155-171